# EUROPÄISCHE PATENTSCHRIFT

(11) **EP 1 141 662 B1**
(45) Veröffentlichungstag und Bekanntmachung des Hinweises auf die Patenterteilung: **14.05.2003**
(21) Anmeldenummer: 99955998.2
(22) Anmeldetag: 16.11.1999
(51) Int. Cl.: G01D 5/347

(54) **DREIDIMENSIONALES MESSMODUL**
THREE-DIMENSIONAL MEASURING MODULE
MODULE DE MESURE TRIDIMENSIONNEL

(30) Priorität: 03.12.1998 DE 19855828
(43) Veröffentlichungstag der Anmeldung: 10.10.2001
(73) Patentinhaber: Dr. Johannes Heidenhain GmbH, 83292 Traunreut (DE)
(72) Erfinder: BURGSCHAT, Reiner, D-07745 Jena (DE)
(86) Internationale Anmeldenummer: EP9908801
(87) Internationale Veröffentlichungsnummer: WO00033033

(56) Entgegenhaltungen:
- EP-A- 0 564 683
- EP-A- 0 789 228
- US-A- 4 700 065
- BURGSCHAT R: "DIE NEUE DIMENSION IN DER WEG-UND WINKELMESSTECHNIK A NEW DIMENSION IN DISPLACEMENT AND ANGLE MEASURING TECHNOLOGY" F & M FEINWERKTECHNIK MIKROTECHNIK MIKROELEKTRONIK,DE,CARL HANSER GMBH & CO, Bd. 104, Nr. 10, 1. Oktober 1996 (1996-10-01), Seiten 752-754,756, XP000631174 ISSN: 0944-1018 in der Anmeldung erwähnt

## Beschreibung

Die Erfindung betrifft einen dreidimensionalen Aufbau eines Meßmoduls nach Anspruch 1.

Aus der EP 838 665 A1 ist ein optisches Längenmeßgerät bekannt, das aus einem Maßstab, einer Lichtquelle und einer Abtastbaugruppe mit einem Abtastgitter besteht. Dabei sendet die Lichtquelle kollimiertes Licht auf den Maßstab, der eine optische Teilung trägt. Die Abtastbaugruppe detektiert Helligkeitsschwankungen entsprechend der Verschiebung zwischen Maßstab und Abtastbaugruppe. Die Abtastbaugruppe weist auf einem Glassubstrat Dünnschichtleiter und einen lichtempfindlichen Optochip auf, der eine Gruppe lichtempfindlicher Bauteile und das Abtastgitter beinhaltet. Die Abtastbaugruppe wird auf der anderen Seite des Maßstabs angeordnet, so daß der lichtempfindliche Optochip das kollimierte Licht empfängt. Der lichtempfindliche Optochip wird durch Lötpunkte und einen sogenannten Underfiller, eine transparente Versiegelung, welche zwischen den Optochip und das Glassubstrat eingebracht wird, mechanisch befestigt.

Dabei ist von Nachteil, daß die auf dem Glassubstrat der Abtastbaugruppe aufgebrachten Schaltungen eine große Fläche benötigen, wodurch relativ lange Leiterbahnen, insbesondere zur Verbindung mit einer Signalauswerteeinheit, erforderlich werden.

Aus der EP 564 683 A1 ist ein optoelektronisches Weg-, Winkel- oder Rotationsmeßgerät bekannt. Dieses weist einen beleuchteten oder durchleuchteten Codeträger mit wenigstens einer Codespur auf. Neben der Codespur ist eine Blendeneinrichtung in Form einer Platte mit der Codespur zugeordnetem lichtdurchlässigem Bereich angeordnet. Weiterhin ist ein optoelektronischer Sensor auf der dem Codeträger abgewandten Seite der Btendeneinrichtung mit einer der Blendeneinrichtung zugewandten Sensorfläche angeordnet. An der plattenförmigen Blendeneinrichtung ist auf der dem Codeträger abgewandten Seite ein optoelektronischer Halbleiterchip als Sensor vorgesehen, der auf der plattenförmigen Blendeneinrichtung zugewandten Seite Kontaktstellen aufweist. Die Platte weist zu diesen Kontaktstellen entsprechende elektrische Leiterbahnen auf, die mit den Kontaktstellen des Halbleiterchips über Lotpunkte elektrisch leitend verbunden werden; durch eine Vergußmasse wird der Halbleiterchip zusätzlich mechanisch stabilisiert.

Auch hier ist von Nachteil, daß der Sensor einschließlich der erforderlichen Auswerteelektronik relativ viel Platz benötigt und daher lange Leiterbahnen erforderlich sind

Aus der DE 197 20 300 A1 ist ein elektronisches Hybrid-Bauelement und ein Verfahren zu seiner Herstellung bekannt. Bei diesem Bauelement wird in einer Chip-on-Chip-Anordnung in einem Trägersubstrat, welches den ersten Chip bildet, mindestens eine Kavität eingearbeitet, in die eine elektrische Isolationsschicht mit einer darüber angeordneten Metallschicht eingebracht wird. Ein in der Kavität angeordneter zweiten Chip in Form einer Leuchtdiode wird mit der Metallschicht leitend verbunden und ragt höchstens unwesentlich über den ersten Chip aus der Kavität hinaus. Die Kavitäten im ersten Chip werden dabei durch anisotrope Ätzung erzeugt. Die Isolierung wird durch Oxidieren der Oberfläche des ersten Chips oder durch Abscheiden einer Isolatorschicht erreicht. Die Metallisierung kann ein Mehrfach-Metallisierungssystem beinhalten und durch einen fotolithographischen Prozeß strukturiert werden. Der in der Kavität angeordnete zweite Chip kontaktiert die derart in der Kavität erzeugte Metallisierung und wird zusätzlich auf der Vorderseite mit dem ersten Chip kontaktiert.

Dieses Hybrid-Bauelement weist den Nachteil auf, daß die Kavität und deren Beschichtung ebenso wie die Kontaktierung zwischen den beiden Chips relativ kompliziert zu realisieren ist. Weiterhin wird nicht beschrieben, wie ein möglichst kompaktes Meßmodul für ein Längen- oder Winkelmeßsystem unter Benutzung der Chip-on-Chip-Anordnung zu optimieren wäre.

In dem Artikel "Die neue Dimension in der Weg- und Winkelmeßtechnik" von Reiner Burgschat, erschienen in F & M Feinwerktechnik, Mikrotechnik, Mikroelektronik, Ausgabe 10/96, Seite 752 - 756, wird ein Meßmodul beschrieben, das in einer Einebenenschaltung auf einem Glasträger realisiert wurde. Die für ein Meßsystem benötigten Leuchtdioden werden auf die Oberfläche eines Optochips derart aufgebracht und kontaktiert, daß sie durch den Glasträger hindurch die Strahlung emittieren. Der Optochip weist ein Fotodiodenarray auf, das in Flip-Chip-Technik auf den Glasträger aufgelötet wird und die durch den Glasträger hindurchgetretene Strahlung detektiert. Um die einzelnen Bauteile zu verbinden, ist auf den Glasträger eine Leiterbahnstruktur aufgebracht, die die in einer Ebene angeordneten Baugruppen Optochip mit elektronischer Signalaufbereitung verbindet. Zusätzlich weist der Glasträger auch eine Abtastteilung auf. Zwischen Optochip mit Fotodiodenarray und Leuchtdioden und dem Glasträger wird dabei zur mechanischen Stabilisierung ein Underfiller eingebracht. Zum Schutz dieses Meßmoduls wird eine Keramikkappe über die auf den Glasträger aufgebrachten Baugruppen befestigt.

Dabei ist von Nachteil, daß die gesamte Schaltung in einer Ebene realisiert wird, was einen relativ großen Glasträger erforderlich macht und lange Leiterbahnen auf dem Glasträger zur Folge hat. Dadurch erhöht sich die Empfindlichkeit gegen Störeinstrahlungen und der Leitungswiderstand steigt an. Weiterhin kann der Underfiller in den Strahlengang zwischen Leuchtdiode, Abtastgitter, Maßstab und Fotodiodenarray gelangen und die optischen Eigenschaften der Anordnung verschlechtern.

Aus der EP 060 021 A2 ist lediglich bekannt, über einer Abtaststruktur eines Drehgebers eine optoelektronische Baugruppe auf einer Leiterplatte anzuordnen. Auf der anderen Seite der Leiterplatte sind zusätzliche Baugruppen zur Signalverarbeitung angeordnet.

Dabei ist von Nachteil, daß die Baugruppen durch eine Leiterplatte getrennt werden, was zwangsläufig eine relativ große Bauhöhe der dreidimensional übereinander angeordneten optoelektronischen Baugruppen, Leiterplatte und Baugruppen zur Signalverarbeitung bedingt.

Aus der EP 789 228 A2 ist bekannt, auf einem transparenten Träger Leiterbahnen anzuordnen, durch welche eine Verbindung zwischen einer Leiterplatte und einer optoelektronischen Baugruppe erfolgt. Weiterhin werden die Verbindungsstellen zwischen Leiterbahnen von Leiterplatte, transparentem Träger und optoelektronischer Baugruppe als mechanische Fixierung für den transparenten Träger und die optoelektronische Baugruppe mitbenutzt.

Dies weist den Nachteil auf, daß nur eine geringe mechanische Stabilität der Anordnung gegeben ist. Obwohl eine möglichst exakte Ausrichtung von optoelektronischer Baugruppe zum transparentem Träger und der Leiterplatte erforderlich ist, kann bereits durch geringfügige mechanische Einwirkungen eine Veränderung der Anordnung, beispielsweise durch Leiterbahnablösung, verursacht werden.

Es stellt sich daher die Aufgabe, eine Schaltungsanordnung für ein Meßmodul, bestehend aus Optoeinheit und Siganlverarbeitungselektronik anzugeben, das möglichst kleinbauend realisiert werden kann, so daß die Leitungslängen der elektrischen Leiterbahnen, vor allem zwischen optischem Sensor und Auswerteelektronik, möglichst kurz sind. Weiterhin soll die Notwendigkeit der mechanischen Stabilisierung mittels Underfiller möglichst vollständig entfallen.

Diese Aufgabe wird durch eine Schaltungsanordnung mit den Merkmalen des Anspruchs 1 gelöst.

Vorteilhafte Ausführungsformen des erfindungsgemäßen Verfahrens und der erfindungsgemäßen Schaltungsanordnung ergeben sich aus den Merkmalen der jeweils abhängigen Ansprüche.

Das erfindungsgemäße Verfahren weist den Vorteil auf, daß aufgrund der spezifischen dreidimensionalen Anordnung von Optoeinheit und Signalverarbeitungselektronik räumlich übereinander die verbindenden Leiterbahnen sehr kurz gehalten werden können. Dadurch sind die Widerstände der Leiterbahnen nur gering, so daß auch ein schwaches Ausgangssignal eines Optosensors in der Signalverarbeitungselektronik noch fehlerfrei erkannt werden kann. Weiterhin von Vorteil ist, daß die Empfindlichkeit für Störeinstrahlungen, die vor allem über lange Leiterbahnen empfangen werden, welche als Antennen für die Störeinstrahlung wirken, aufgrund der nur kurzen Leiterbahnen zwischen Optosensor und Signalverarbeitungselektronik wesentlich geringer ist.

Einzelheiten und weitere Vorteile der Erfindung werden im folgenden anhand der in der Zeichnung dargestellten Ausführungsform näher erläutert.

Es zeigt:
Figur 1: Eine ebene Schnittdarstellung einer möglichen Realisierungsform eines erfindungsgemäßen Meßsystems und
Figur 2: eine dreidimensionale Darstellung des erfindungsgemäßen Meßsystems aus Fig. 1.

Im folgenden wird davon ausgegangen, daß das erfindungsgemäße dreidimensionale Meßmodul in einem Längenmeßsystem eingesetzt wird. Der Einsatz bei einem Winkelmeßsystem ist jedoch durch einfachen Austausch des Maßstabs ohne Änderung an dem erfindungsgemäßen dreidimensionalen Meßmodul möglich.

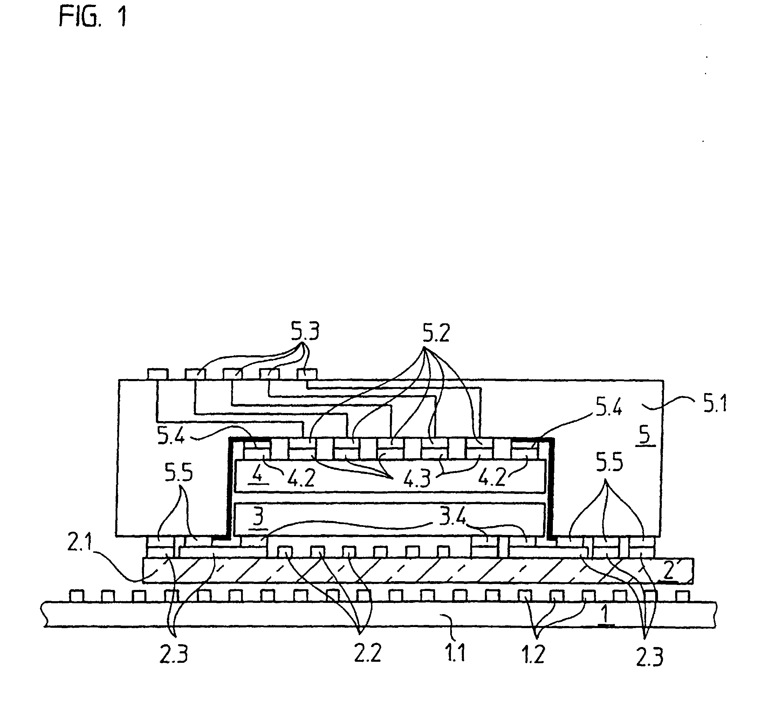

Fig. 1 zeigt einen senkrechten Schnitt durch ein Meßsystem mit dem erfindungsgemäßen dreidimensionalen Meßmodul. Der Maßstab 1 des Meßsystems besteht aus einem Trägerkörper 1.1, auf den eine Teilung 1.2 aufgebracht wurde. Der Maßstab 1 reflektiert das auf ihn treffende Licht an den Teilstrichen 1.2 und deren Zwischenräumen unterschiedlich oder es treten Beugungseffekte an der Teilung 1.2 des Maßstabs 1 und der Teilung 2.2 der Abtastplatte 2 auf.

Die Abtastplatte 2 weist einen Trägerkörper 2.1 aus lichtdurchlässigem Material, bevorzugt Glas, auf und trägt auf der dem Maßstab zugewandten oder abgewandten Seite eine Teilung 2.2. Weiterhin sind auf dem Trägerkörper 2.1 der Abtastplatte 2 Leiterbahnen und Kontakte 2.3 angeordnet, wobei die in der Nähe der Abtastteilung 2.2 angeordneten Kontakte 2.3 mit Kontakten 3.4 eines Optochips 3 kontaktieren und die Leiterbahnen 2.3 diese Kontakte mit weiter außen auf der Abtastplatte 2 liegenden Kontakten 2.3 verbinden, die wiederum mit Kontakten 5.5 eines Gehäuses 5 kontaktieren.

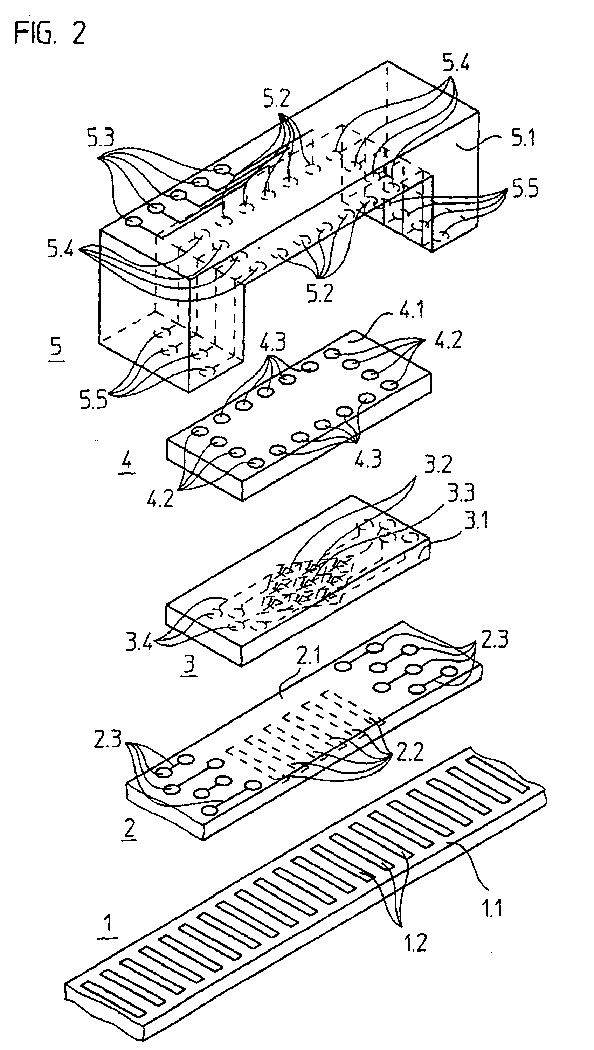

Der bereits erwähnte Optochip 3 weist, wie in Figur 2 detaillierter dargestellt, ein Diodenarray mit mindestens einer Fotodiode 3.2 und mindestens einer Leuchtdiode 3.3 auf. Die Dioden 3.2 und 3.3 sind derart orientiert, daß die Leuchtdioden 3.3 bevorzugt in Richtung der Abtastplatte 2 und des Maßstabs 1 abstrahlen und die Fotodioden 3.2 die vom Maßstab 1 reflektierte und durch die Abtastplatte 2 hindurchgetretene Lichtstrahlung der Leuchtdioden 3.3 detektieren.

Die Leuchtdioden 3.3 und Fotodioden 3.2 sind über Leiter und Kontakte 3.4 auf dem Optochip 3 und über Leiter und Kontakte 2.3 der Abtastplatte 2 mit den Kontakten 5.5 des Gehäuses 5 verbunden. Das Gehäuse 5 besteht vorzugsweise aus Keramik, und schützt den gesamten zwischen der Abtastplatte 2 und dem Gehäuse 5 liegenden Teil des Meßmoduls gegen äußere Einflüsse gleich welcher Art. Im Gehäuse sind die Kontakte 5.5 über elektrische Leiter mit den Kontakten 5.4 verbunden, welche eine Verbindung zu den Kontakten 4.2 einer Signalverarbeitung 4 herstellen. In der Signalverarbeitung 4 werden die Ausgangssignale der Fotodioden 3.2 verstärkt und zu einem Ausgangssignal gemäß einem Standard, beispielsweise zu einem digitalen Ausgangssignal mit 5 V TTL-Pegel, weiterverarbeitet. In der Signalverarbeitung 4 können auf die Ausgangssignale der Fotodioden 3.2 beliebige Verarbeitungsverfahren, vorzugsweise digitale, angewendet werden.

Die Ausgangssignale der Signalverarbeitung 4 werden über Kontakte 4.3 an die Kontakte 5.2 des Gehäuses 5 geleitet, von wo aus die Ausgangssignale über Leiterbahnen von der Innenseite des Gehäuses 5 an die Kontakte 5.3 auf der Außenseite des Gehäuses 5 geleitet werden. Diese außen liegenden Kontakte 5.3 können dann, beispielsweise mittels herkömmlichem Bonden, kontaktiert werden.

Die erfindungsgemäße Anordnung von Optochip 3, Signalverarbeitung 4 und Gehäuse 5 übereinander und die spezielle Führung der Leiterbahnen von den Fotodioden 3.2 über die Signalverarbeitung 4 zu den äußeren Kontakten 5.3, wie in Figur 1 dargestellt, ermöglichen besonders kurze Leiterbahnen, die eine besonders gute Signalübertragung ermöglichen. Durch die Schutzfunktion des Gehäuses 5 für Optochip 3 und Signalverarbeitung 4 insbesondere gegen mechanische Belastungen, ermöglichen, daß ein zusätzlicher Underfiller zur mechanische Stabilisierung des Optochips 3 nicht mehr erforderlich wird; zusätzlich kann auch die Signalverarbeitung 4 ausschließlich durch ihre Lötverbindungen 4.2 und 4.3 mit dem Gehäuse 5 mechanisch verbunden werden.

In Figur 2 ist das in Figur 1 im Schnitt dargestellte Meßsystem in einer dreidimensionalen Darstellung gezeichnet. Für gleiche Bauteile wurden dabei in beiden Figuren gleiche Bezugszeichen verwendet. Der Maßstab 1 trägt auf seinem Grundkörper 1.1 die Teilung 1.2, wobei die eingerahmten Teilungsflächen eine unterschiedliche Reflexion aufweisen, wie die nicht eingerahmten Teilungsflächen. Der Unterschied kann dabei darin liegen, daß die Intensität der Reflexion unterschiedlich ist oder daß an der Teilung 1.2 Beugung auftritt.

Die auf der optisch transparenten Abtastplatte 2 vorgesehene Teilung 2.2 wirkt mit der Teilung 1.2 des Maßstabs 1 optisch zusammen und es weisen die eingerahmten Bereiche der Teilung 2.2 ein unterschiedliches Transmissionsverhalten für das von der Leuchtdiode 3.3 gesendete Licht auf wie die nicht eingerahmten Bereiche der Teilung 2.2. Dabei ist es unerheblich, ob die Teilung 2.2 der Abtastplatte 2 auf der dem Maßstab 1 zugewandten oder abgewandten Seite aufgebracht wird. Weiterhin sind auf der Abtastplatte 2 Kontakte und elektrische Leiterbahnen 2.3 vorgesehen, die dazu benutzt werden, um ein elektrisches Signal von einem Optochip 3 zu Kontakten eines Gehäuses 5 zu leiten. Die Leiter und Kontakte 2.3 sind dabei derart angeordnet, daß sie sich nicht im Strahlengang eines von einer Leuchtdiode 3.3 des Optochips 3 kommenden Lichtstahls befinden, der im Bereich der Teilung 2.2 durch die Abtastplatte 2 hindurchtritt, vom Maßstab reflektiert wird und wieder auf den Optochip 3 trifft. Weiterhin werden die Längen der elektrischen Leiter möglichst kurz gewählt. Daher hat es sich als günstig erwiesen, die Leiter und Kontakte 2.3 neben der Teilung 2.2 anzuordnen, wie in Figur 2 dargestellt. Der Trägerkörper 2.1 der Abtastplatte 2 ist zumindest für die von der Leuchtdiode 3.3 des Optochips 3 ausgesandten Strahlung transparent. Da diese Strahlung in der Regel im sichtbaren Bereich des Lichts liegt, wird der Trägerkörper 2.1 bevorzugt aus Glas gefertigt.

Mit der Abtastplatte 2 ist, beispielsweise in Flip-Chip-Technologie, ein Optochip 3 verbunden, der zu einem Teil der auf der Abtastplatte 2 angeordneten Kontakten 2.3 komplementäre Kontakte 3.4 aufweist. Diese Kontakte 3.4 sind über Leitungen mit mindestens einer Fotodiode 3.2 und mindestens einer Leuchtdiode 3.3 verbunden, so daß die Leuchtdioden 3.3 mit Spannung versorgt werden und die Ausgangssignale der Fotodioden 3.2 über die Abtastplatte 2 weitergeleitet werden.
Vorteilhaft sind mehrere Fotodioden 3.2 derart angeordnet, daß sie ein Quadrat bilden, das zur Fläche der Abtastplatte 2 um 45 Winkelgrad gedreht ist, wie in Figur 2 dargestellt. Im Zentrum dieses Quadrats aus Fotodioden 3.2 ist keine Fotodiode 3.2, sondern mindestens eine Leuchtdiode 3.3 angeordnet. Dabei wird die Leuchtdiode 3.3 vorteilhaft derart angeordnet, daß das abgestahlte Licht nicht unmittelbar auf die Fotodioden 3.2 trifft, sondern eine Vorzugsrichtung in Richtung der Abtastplatte 2 und des Maßstabs 1 hat. Dies wird dadurch erreicht, daß die Leuchtdiode 3.3 in einer Vertiefung des Optochips 3 angeordnet wird. Dadurch bildet das Halbleitersubstrat des Optochips 3 eine Blende, die eine unmittelbare Einstrahlung des von der Leuchtdiode 3.3 emittierten Lichts auf die Fotodioden 3.2 verhindert.

Wie bereits beschrieben, werden die Ausgangssignale der Fotodioden 3.2 und die Versorgungsspannung der Leuchtdiode 3.3 über die Kontakte und Leiterbahnen 3.4 zu den Kontakten und Leiterbahnen 2.3 der Abtastplatte 2 und von dort zu den Kontakten 5.5 des Gehäuses 5 weitergeleitet. Im Gehäuse erfolgt die Weiterleitung über Leiter zu den Kontakten 5.4 und über diese zu den Kontakten 4.2 einer Signalverarbeitung 4.

In der Signalverarbeitung 4 werden die relativ schwachen Ausgangssignale der Fotodioden 3.2 zunächst mittels rauscharmer Verstärker verstärkt. Dabei ist wichtig, daß die Verstärker möglichst nahe an den Fotodioden 3.2 angeordnet sind, da bei großen Leiterbahnlängen sich dem Nutzsignal der Fotodioden 3.2 Störungen überlagern. Die Leiterbahnen wirken wie Antennen, die elektro-magnetische Wellen empfangen und dem Nutzsignal als Störung überlagern. Aufgrund der Anordnung der Signalverarbeitung 4 räumlich über der optoelektronischen Baugruppe 3 können die Leiterbahnen besonders kurz gehalten werden, was zu nur sehr geringen Störeinkopplungen führt. Weiterhin sind kurze Leiterbahnen besonders vorteilhaft im Hinblick auf den geringeren Leitungswiderstand, der aufgrund der nur sehr dünnen Leitungen nicht vernachlässigbar ist. Bei den erfindungsgemäß nur kurzen Leiterbahnen fällt über deren Länge weniger Spannung ab als über längere Leiterbahnen, so daß die Nutzsignalamplitude in der Signalverarbeitungseinheit 4 bei kürzeren Leiterbahnen größer ist als bei langen. Nach der Verstärkung in der Signalverarbeitung 4 können die Ausgangssignale der Fotodioden 3.2 noch beliebigen, insbesondere digitalen Verarbeitungsschritten unterworfen werden, bis das gewünschte Ausgangssignal an den Kontakten 4.3 der Signalverarbeitung 4 ausgegeben wird. Die Signalverarbeitung selbst wird durch eine Baugruppe realisiert, die analoge und digitale Komponenten umfaßt. Vorteilhaft sind analoge und digitale Komponenten zu einer einzigen räumlichen Einheit, der Signalverarbeitung 4, zusammengefaßt.

Die Kontakte 4.3 der Signalverarbeitung 4 kontaktieren mit den Kontakten 5.2 des Gehäuses 5, das in Figur 2 ohne Vorder- und Rückwand dargestellt ist. Durch das vorzugsweise aus Keramik bestehende Gehäuse 5 und die Abtastplatte 2 werden der Optochip 3 und die Signalverarbeitung 4 vollständig umschlossen, so daß diese Baugruppen von der Umwelt abgeschirmt sind und das Meßmodul eine Einheit bildet. Es wirken auf die beiden Baugruppen nur noch die Schwerkraft und Massenträgheit bei Beschleunigung, so daß die mechanische Befestigung dieser Baugruppen allein mittels der leitenden Verbindungen 4.2, 4.3 und 3.4 ausreicht.

Im Gehäuse 5 verlaufen, wie bereits beschrieben, diverse Leiterbahnen. Es verlaufen insbesondere von den Kontakten 5.2 des Gehäuses 5 Leiterbahnen zu den Kontakten 5.3 sowie zwischen den Kontakten 5.5 und 5.4. Dadurch werden die Ausgangssignale der Signalverarbeitung 4 nach außerhalb des Gehäuses 5 geführt. Die Kontaktflächen 5.3 können beim Endanwender für herkömmliche Verbindungstechniken benutzt werden. Die Kontakte 5.3 sind insbesondere dafür geeignet herkömmliche Leitungen, wie beispielsweise Flachbandkabel, daran anzulöten.

## Patentansprüche

1. Dreidimensionales Meßmodul, bei dem eine Abtastplatte (2) und eine Schutzkappe (5) eine optoelektronische Baugruppe (3) und eine Signalverarbeitungseinheit (4) im wesentlichen einschließt, **dadurch gekennzeichnet, daß**
- die optoelektronische Baugruppe (3) Fotodioden (3.2) und Leuchtdioden (3.3) umfaßt,
- die optoelektronische Baugruppe (3) und die Signalverarbeitungseinheit (4) separate Baugruppen sind,
- die Signalverarbeitungseinheit (4) räumlich über der optoelektronischen Baugruppe (3) und die optoelektronische Baugruppe (3) räumlich über der Abtastplatte (2) angeordnet ist

2. Dreidimensionales Meßmodul nach Anspruch 1, **dadurch gekennzeichnet, daß** in der Schutzkappe (5) und auf der Abtastplatte (2) elektrische Leitungen (2.3, 5.4, 5.5) verlaufen, durch die die optoelektronische Baugruppe (3) mit der Signalverarbeitungseinheit (4) verbunden wird und daß in der Schutzkappe (5) elektrische Leitungen derart verlaufen, daß die Kontakte (4.3) für Ausgangssignale der Signalverarbeitungseinheit (4) mit Kontakten (5.3) auf der Außenseite der Schutzkappe (5) verbunden werden.

3. Dreidimensionales Meßmodul nach Anspruch 1 oder 2, **dadurch gekennzeichnet, daß** die Schutzkappe (5) von außen zugängliche elektrische Kontakte (5.3) aufweist und daß in der Schutzkappe (5) elektrische Leitungen verlaufen, die eine Verbindung der Kontakte (5.3) über die Kontakte (5.2) der Schutzkappe (5) mit elektrischen Kontakten (4.3) der Signalverarbeitungseinheit (4) herstellen.

4. Dreidimensionales Meßmodul nach einem der Ansprüche 1 bis 3, **dadurch gekennzeichnet, daß** die Eingänge (4.2) der Signalverarbeitungseinheit (4) über in der Schutzkappe (5) verlaufende Leitungen, Kontakte (5.4, 5.5) auf der Schutzkappe (5) und Kontakte (2.3) auf der Abtastplatte (2), über auf der Abtastplatte (2) verlaufende Leitungen, weitere Kontakte (2.3) auf der Abtastplatte (2) und Kontakte (3.4) auf der optoelektronischen Baugruppe (3) mit der optoelektronischen Baugruppe (3) verbunden sind.

5. Dreidimensionales Meßmodul nach einem der Ansprüche 1 bis 4, **dadurch gekennzeichnet, daß** die optoelektronische Baugruppe (3) mindestens eine Fotodiode (3.2) und mindestens eine Leuchtdiode (3.3) aufweist und daß die mindestens eine Fotodiode (3.2) und mindestens eine Leuchtdiode (3.3) auf der der Abtastplatte (2) zugewandten Seite der optoelektronischen Baugruppe (3) angeordnet sind.

6. Dreidimensionales Meßmodul nach einem der Ansprüche 1 bis 5, **dadurch gekennzeichnet, daß** die optoelektronische Baugruppe (3) auf der der Abtastplatte (2) zugewandten Seite Kontakte (3.4) aufweist, zu denen auf der Abtastplatte (2) korrespondierende Kontakte (2.3) vorgesehen sind und daß durch eine elektrische Verbindung der zugehörigen Kontakte (2.3, 3.4) auch eine mechanische Verbindung zwischen Abtastplatte und optoelektronischer Baugruppe (3) erreicht wird.

7. Dreidimensionales Meßmodul nach einem der Ansprüche 1 bis 6, **dadurch gekennzeichnet, daß** das Eingangssignal der Signalverarbeitung (4) rauscharmen Verstärkern zugeleitet wird.

8. Meßsystem mit einer linearen oder runden Maßverkörperung (1), **dadurch gekennzeichnet, daß** es ein dreidimensionales Meßmodul nach einem der vorhergehenden Ansprüche aufweist.

## Claims

1. Three-dimensional measuring module, in which a scanning plate (2) and a protective cap (5) essentially enclose an optoelectronic assembly (3) and a signal processing unit (4),
**characterised in that**
- the optoelectronic assembly (3) comprises photodiodes (3.2) and light-emitting diodes (3.3),
- the optoelectronic assembly (3) and the signal processing unit (4) are separate assemblies,
- the signal processing unit (4) is spatially disposed above the optoelectronic assembly (3) and the optoelectronic assembly (3) is spatially disposed above the scanning plate (2).

2. Three-dimensional measuring module according to claim 1,
**characterised in that**, in the protective cap (5) and on the scanning plate (2), electrical conductive lines (2.3, 5.4, 5.5) run, by means of which the optoelectronic assembly (3) is connected to the signal processing unit (4), and **in that**, in the protective cap (5), electrical conductive lines run, such that the contacts (4.3) for output signals of the signal processing unit (4) are connected to contacts (5.3) on the exterior side of the protective cap (5).

3. Three-dimensional measuring module according to claim 1 or 2,
**characterised in that** the protective cap (5) has electrical contacts (5.3) which are accessible from the exterior, and **in that**, in the protective cap (5), electrical conductive lines run, which connect the contacts (5.3), via the contacts (5.2) of the protective cap (5), to the electrical contacts (4.3) of the signal processing unit (4).

4. Three-dimensional measuring module according to one of the claims 1 to 3,
**characterised in that** there are connected to the optoelectronic assembly (3) the inputs (4.2) of the signal processing unit (4) via the conductive lines running in the protective cap (5), the contacts (5.4, 5.5) on the protective cap (5) and contacts (2.3) on the scanning plate (2) via conductive lines running on the scanning plate (2), further contacts (2.3) on the scanning plate (2) and contacts (3.4) on the optoelectronic assembly (3).

5. Three-dimensional measuring module according to one of the claims 1 to 4,
**characterised in that** the optoelectronic assembly (3) has at least one photo-diode (3.2) and at least one light-emitting diode (3.3), and **in that** at least the one photo-diode (3.2) and at least the one light-emitting diode (3.3) are disposed on the side of the optoelectronic assembly (3) which is facing towards the scanning plate (2).

6. Three-dimensional measuring module according to one of the claims 1 to 5,
**characterised in that**, on the side facing towards the scanning plate (2), the optoelectronic assembly (3) has contacts (3, 4), contacts (2.3) corresponding to which are provided on the scanning plate (2), and **in that**, by an electrical connection of the associated contacts (2.3, 3.4), a mechanical connection between scanning plate and optoelectronic assembly (3) is also achieved.

7. Three-dimensional measuring module according to one of the claims 1 to 6,
**characterised in that** the input signal of the signal processing unit (4) is fed to low-noise amplifiers.

8. Measuring system having a linear or a round material measure (1), **characterised in that** it has a three-dimensional measuring module according to one of the preceding claims.

## Revendications

1. Module de mesure tridimensionnel, dans lequel une plaque de palpage (2) et une coiffe de protection (5) enferment un bloc optoélectronique (3) et une unité de traitement de signal (4), **caractérisé en ce que**
· le bloc optoélectronique (3) comprend des photodiodes (3.2) et des diodes électroluminescentes (3.3),
· le bloc optoélectronique (3) et l'unité de traitement de signal (4) sont des ensembles séparés,
l'unité de traitement de signal (4), dans l'espace, est située au-dessus du bloc optoélectronique (3) et le bloc optoélectronique (3), dans l'espace, est situé au-dessus de la plaque de palpage (2).

2. Module de mesure tridimensionnel selon la revendication 1, **caractérisé en ce que** dans la coiffe de protection (5) et sur la plaque de palpage (2) sont prévus des conducteurs électriques (2.3, 5.4, 5.5) par lesquels le bloc optoélectronique (3) est relié à l'unité de traitement de signal (4), et **en ce que** des conducteurs électriques sont disposés dans la coiffe de protection (5) de telle sorte que les contacts (4.3) pour les signaux de sortie de l'unité de traitement de signal (4) soient reliés à des contacts (5.3) sur la face extérieure de la coiffe de protection (5).

3. Module de mesure tridimensionnel selon la revendication 1, **caractérisé en ce que** la coiffe de protection (5) est pourvue de contacts électriques (5.3) accessibles de l'extérieur et **en ce que** des conducteurs électriques qui relient les contacts (5.3) à des contacts électriques (4.3) de l'unité de traitement de signal (4) via les contacts (5.2) de la coiffe de protection (5) sont prévus dans la coiffe de protection (5).

4. Module de mesure tridimensionnel selon une des revendications 1 à 3, **caractérisé en ce que** les entrées (4.2) de l'unité de traitement de signal (4), par l'intermédiaire de conducteurs prévus dans la coiffe de protection (5), des contacts (5.4, 5.5) sur la coiffe de protection (5) et des contacts (2.3) sur la plaque de palpage (2), par l'intermédiaire de conducteurs prévus sur la plaque de palpage (2), et des contacts supplémentaires (2.3) sur la plaque de palpage (2) ainsi que des contacts (3.4) sur le bloc optoélectronique (3) sont reliés au bloc optoélectronique (3).

5. Module de mesure tridimensionnel selon une des revendications 1 à 4, **caractérisé en ce que** le bloc optoélectronique (3) comprend au moins une photodiode (3.02) et au moins une diode électroluminescente (3.3) et **en ce que** la photodiode (3.2), au nombre d'au moins une, et la diode électroluminescente (3.3), au nombre d'au moins une, sont disposées sur le côté du bloc optoélectronique (3) tourné vers la plaque de palpage (2).

6. Module de mesure tridimensionnel selon une des revendications 1 à 5, **caractérisé en ce que** le bloc optoélectronique (3), sur son côté tourné vers la plaque de palpage (2), comporte des contacts (3.4) auxquels sont associés des contacts (2.3) sur la plaque de palpage (2) et **en ce que** par une liaison électrique entre les contacts (2.3, 3.4) associés une liaison mécanique est également assurée entre la plaque de palpage et le bloc optoélectronique (3).

7. Module de mesure tridimensionnel selon une des revendications 1 à 6, **caractérisé en ce que** le signal d'entrée de l'unité de traitement de signal (4) est transmis à des amplificateurs à faible niveau de bruit.

8. Système de mesure comportant une mesure matérialisée (1) linéaire ou ronde, **caractérisé en ce qu'**il comporte un module de mesure tridimenssionnel selon une des revendications précédentes.
